# NEW EUROPEAN PATENT SPECIFICATION

(11) **EP 0 422 913 B3**
(45) Date of publication of this specification: **11.02.2009**
(45) Mention of the grant of the patent: 22.12.1993
(21) Application number: 90311093.0
(22) Date of filing: 10.10.1990
(51) Int. Cl.: A01K 97/12

(54) **A bite indicator**
Bissanzeiger
Indicateur de touche

(30) Priority: 10.10.1989 GB 8922783; 22.12.1989 GB 8929092
(43) Date of publication of application: 17.04.1991
(73) Proprietor: FOX DESIGN INTERNATIONAL LIMITED, Hainault Essex IG6 3UT (GB)
(72) Inventor: Tyler, Michael John Colin, Benfleet, Essex (GB); Fox, Clifford Royston, Chelmsford Essex (GB)
(74) Representative: Crouch, David John

(56) References cited:
- GB-A- 1 258 990
- GB-A- 1 502 325
- GB-A- 2 143 412
- GB-A- 2 143 711
- GB-A- 2 166 331
- GB-A- 2 175 782
- GB-A- 2 199 721

## Description

The present invention relates to a bite indicator for use in indicating a bite made by a fish on a line of a fishing rod, comprising a pivot member, an arm which is attached to the pivot member in a pivotable manner, and a line engagement part which is attached to the arm at a position which is spaced from the pivot member which part is adapted to engage such a line when the indicator is in use, whereby a slackening or a tightening of the line will cause the line engagement part to drop or rise as the arm pivots downwardly or upwardly about its pivotal attachment to the pivot member, the indicator being so constructed that the pivot member can be made secure with the ground independently of the rod when the indicator is in use, and the line engagement part being so constructed as to be readily disengageable from such a line, upon the occurrence of a bite.

One such bite indicator is disclosed in GB-A-2,143,711. Whilst the latter does describe the possibility of attaching weights to the arm by screw-threaded means, such a modification is relatively clumsy, time-consuming and limited in the extent and the adjustment that can thus be made.

The present invention seeks to obviate one or more of the foregoing disadvantages.

Accordingly, the present invention is directed to a bite indicator having the construction as set out in the opening paragraph of the present specification, in which a slidable weight having an axial through-bore is attached to the arm which is made of wire in such a manner that it can be slid therealong to adjust the downward force exerted by the line engagement part on such a line, and friction material is inserted into the axial through-bore of said weight to afford a friction engagement on the wire arm which is easily overcome by the hand, but which is great enough to keep the weight at a selected position on the wire arm, characterised in that the wire arm extends from the pivot member in a first direction to a U-shaped portion of the wire arm where it bends through substantially 180° to extend in the opposite direction beyond the pivot member to the line engagement part.

This enables the weight to be slid away from the pivot member towards that part to increase the downward force thereof on the line, or alternatively in the opposite direction, to decrease the downward force of the line engagement part on the line, possibly even to zero value.

Preferably the pivot member is provided with an attachment part which is adapted to be attached to means which support such a rod.

Advantageously, the attachment part and the pivot member are two parts which can be readily joined together or separated by means of mutually conforming portions of those two parts. For example the mutually conforming portions may comprise a dovetail connection. This enables the bulk of the indicator to be removed from the bank stick without unscrewing the rest head, for example.

In a preferred embodiment the wire arm of the bite indicator is made of 60 thou (1.6 mm) diameter stainless steel wire. The wire arm may have a transverse portion which engages the pivot member of the indicator in such a manner as to allow the wire arm to pivot about its transverse portion.

It is preferable to have the U-shaped portion extending in an upright or vertical plane, as this has been found to result in less twitching of the arm in high winds.

Preferably the slidable weight has a slot in its intended rear end to enable that end of the weight to extend beyond the U-shaped portion of the arm.

Advantageously a transverse bore e.g. drilling, extends from the side of the slidable weight to an axial through-bore, to enable a friction material inserted into the axial through-bore of the weight.

A preferred embodiment further comprises an additional weight which has an axial through-bore and an axially extending slot which extends from the outside of the weight to the axial through-bore to allow the weight to be attached to the wire arm. The wire arm may be provided with a friction grip sheath on to which the said additional weight can be slid, so that the sheath fills the axial through-bore, and the additional weight is retained in a selected position on the wire arm with a friction resistance which can be readily overcome by hand to adjust that position.

Advantageously the line engagement part comprises a projection which extends transversely of the arm so that it is cantilevered therefrom.

Preferably the distal end of the projection has an enlarged cross-section relative to a portion of the projection immediately adjacent to that end, to reduce the likelihood of such a line slipping off the projection accidentally, but at the same time readily allowing the line to slip off the end of the projection when the user makes a strike upon the occurrence of a bite.

In a preferred embodiment the enlarged distal end projects in an intended forward and downward direction, so that it engages such a line when the wire arm is horizontal or sloping downwardly, from its pivotal attachment, and releases the line when the arm is lifted.

Advantageously means are fixed relative to the wire arm to cause an electrical signal to be generated upon movement of the wire arm, there being audible or visual signal generating means connected to receive such an electrical signal and to generate an audible or visual signal upon receipt of such a signal.

The present invention also extends to an assembly comprising a bank stick supporting a fishing rod and a bite indicator having one of the foregoing constructions in accordance with the present invention, the bite indicator engaging a line of the fishing rod.

An example of a bite indicator made in accordance with the present invention is illustrated in the accompanying drawings, in which:
Figure 1 shows an elevational side view of the bite indicator in use with a fishing rod and support stick assembly;
Figure 2 shows an exploded perspective view of an attachment part for a pivot member of the indicator, together with a rod rest head of the assembly shown in Figure 1;
Figure 3 shows a perspective view of the assembly shown in Figure 2, together with such a pivot member;
Figure 4 shows a perspective view of an arm of the bite indicator shown in Figure 1
Figure 5 shows a perspective view of a head of the bite indicator shown in Figure 1;
Figure 6 shows an exploded perspective view of the parts of the head of the bite indicator shown in Figure 5;
Figure 7 shows a further exploded perspective view of the head of the bite indicator shown in Figure 1;
Figure 8 shows a plan view of the head shown in Figure 5 showing its engagement with a fishing line;
Figures 9a and 9b show respective perspective views of a movable weight of the bite indicator shown in Figure 1 at respective different positions on the arm;
Figure 10 shows a cross-section of an additional weight for the bite indicator shown in Figure 1;
Figure 11 shows a diagrammatic plan view of a slightly modified form of the assembly shown in Figure 1, on an enlarged scale;
Figure 12 shows a diagrammatic side view of an electronic indicator attachment for the bite indicator shown in Figure 1;
Figure 13 shows a diagrammatic plan view of the electronic indicator attachment shown in Figure 12;
Figure 14 shows a cross-section of an alternative head for the bite indicator shown in Figure 1;
Figure 15 shows a perspective view of a modified form of arm;
Figure 16 shows an axial-sectional view of an alternative head for the bite indicator shown in Figure 1; and
Figure 17 shows a side view of parts of the head shown in Figure 16 with other parts thereof removed for the sake of clarity.

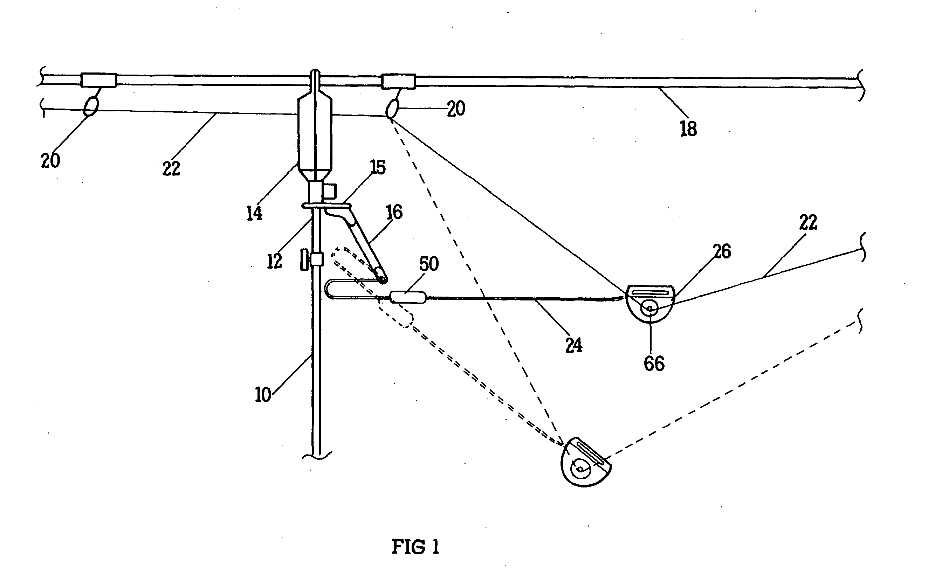

The fishing rod assembly shown in Figure 1 comprises a bank stick 10 at the top of which is provided an internally screw-threaded portion 12 by means of which a rod rest head 14 is secured with an attachment part 15 of a bite indicator clamped therebetween. A pivot member 16 is attached by means of a dovetail joint, to the attachment part 15. A fishing rod 18 is supported by the rod rest head 14. The rod 18 is provided with line rings 20 secured to the rod 18 at positions spaced apart therealong, with the fishing rod line 22 threaded through those rings 20 which thereby act as guides therefore. A stainless steel wire arm 24 extends forwardly from the pivot member 16, and is pivotally attached thereto at one end of the arm, there being a head 26 of the bite indicator which is secured to the other end of the arm 24, and which has a projection resting on the line 22 of the fishing rod 18, at a position between two rings 20 (only one of which is shown in Figure 1), to create a "V" shape in the line. As a result, any increased tension in the line 22 will lift the head 26 in an upward direction, whereas any slackening of the tension in the line 22 will result in a fall of the head 26. Any bite made by a fish on the line of the fishing rod will thereby be indicated, irrespective of whether it results in an increase or decrease in the tension in the line.

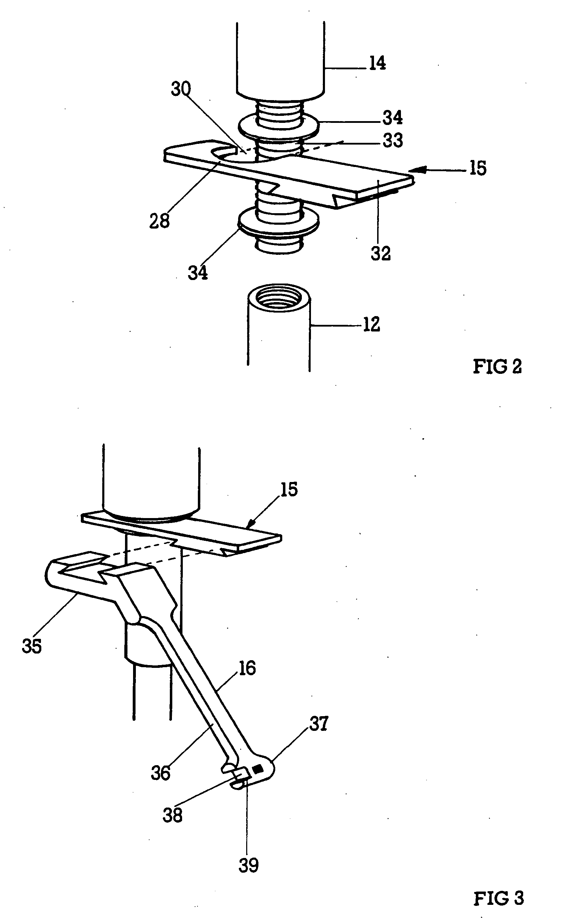

The attachment part 15 of the bite indicator is shown in greater detail in Figure 2, and comprises a plastics injection moulding. It comprises a bank-stick-connecting portion 28 in which is provided a slot 30 which is open at one side of the portion 28, and a joint section 32 which is provided with the male part of a dovetail joint. The attachment part 15 is clamped to the bank stick in the manner shown in Figure 2. Thus the rod rest head 14 has an external screw-threaded shank 33 which screws into the internal screw-threaded portion 12 at the top of the bank stick 10. The portion 28 of the attachment part 15 is positioned so that its slot 30 receives the shank 33 of the rod rest head, and the portion 28 is clamped between the rod rest head 14 and the upper end 12 of the stick 10 via two washers 34.

The pivot member 16 of the bite indicator is shown in greater detail in Figure 3. It comprises a joint portion 35, which is provided with the female part of the dovetail joint and which fits on to the attachment part 15, and an intermediate portion 36 which slants downwardly from the joint portion 35 to an intended lower end. The latter is provided with a generally tubular portion 37 having an internal bore 38 which is transverse to the intermediate portion 36. A slot 39 is formed at one end of the portion 37 to accommodate an end-stop for the pivot end of the arm 24.

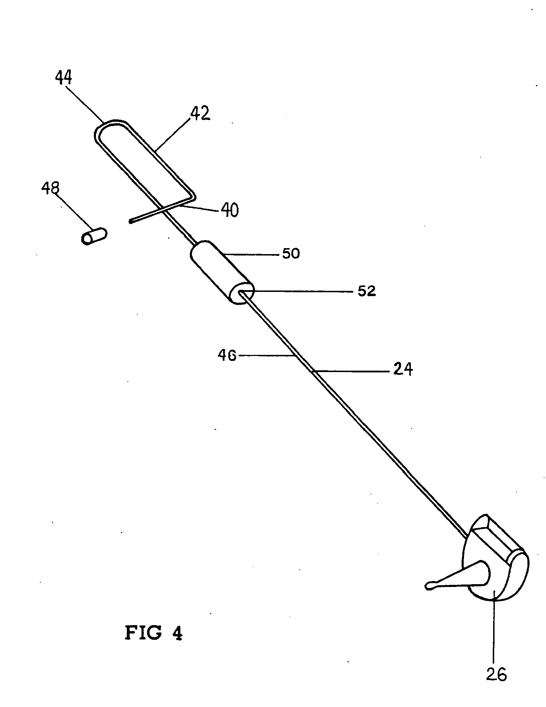

The arm 24 of the bite indicator is shown in greater detail in Figure 4. It comprises a length of stainless steel wire of about 1/16 inch or 60 thou (1.6mm) thickness which is so bent as to have a transverse pivot portion 40 at an intended pivot end thereof, a length 42 which is at substantially 90° to the pivot portion 40 and which extends in an intended rearward direction therefrom, a 180° U-bend 44 into an intended forwardly directed main portion 46 which extends from the U-bend 44, beyond the transverse pivot portion 40, to the head 26 of the bite indicator. The overall length of the arm is about 9 inches (229mm). The transverse pivot portion 40 of the arm 24 extends through the bore 38 of the pivot member 16, the free end of that portion 40 being capped by an end-stop 48 to prevent the arm's transverse pivot portion 40 slipping out of the pivot member 16 whilst at the same time leaving it free to rotate relative thereto about its own axis. A cylindrical or other suitably shaped metal weight 50 through which extends an axial through-bore 52 is attached to the main portion 46 of the arm 24 and slid forwardly or rearwardly to adjust the downward force of the head 26 on the line 22. If the weight is slid to a position which extends on the other side of the pivot point to that of the head of the bite indicator, it will reduce the downward force of the head 26 on the line 22 possibly even to a zero value.

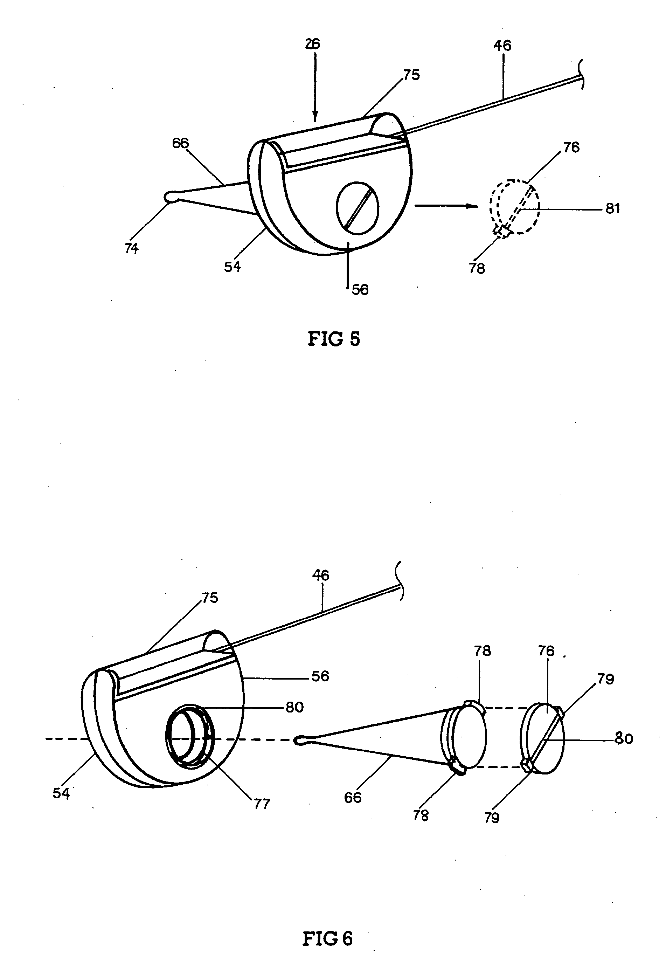

The head 26 of the bite indicator is shown in greater detail in Figures 5 to 8. Thus, the head comprises two halves 54 and 56 which are held together by a transparent elongate inserted U-sectioned cover 75. The two halves 54 and 56 fit together around a curve in the wire at the end of the arm 24. A cone-shaped peg 66, which tapers towards its free end, has a portion at its distal end, which is of enlarged section relative to an immediately adjacent portion of the peg 66. This enlarged end 74 projects forwardly and slightly downwardly so that it engages the line 22 when the arm 24 is horizontal or sloping downwardly from its pivoted attachment and releases the line 22 when the arm 24 is lifted. The proximal end of the peg 66 fits into a hole 77 through the two halves of the head 26. That end of the peg is held in position by means of lugs 78 thereon which are sandwiched between the boundary wall of the hole 77 in one of the two halves 54, and a cap 76 which itself is formed with lugs 79 which are retained by a lip 80 which extends around the hole 77 in the other of the two halves 56. During assembly of the head 26, the peg 66 is inserted through the hole 77, its lugs 78 passing through slots in the lip 80. The cap 76 is then positioned on the head 26 and its lugs 79 are in turn inserted through the slots in the lip 81, whereafter the cap 76 is rotated by means of a coin or screwdriver, by means of a groove 81 so that the lugs 78 engage the lip 80.

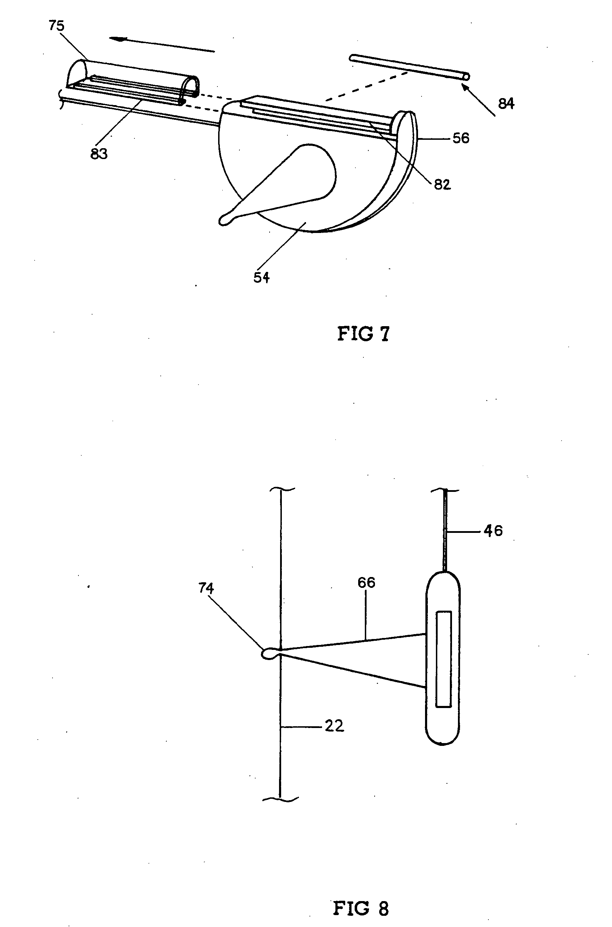

In Figure 7 the cover 75 has been slid off the two halves of the head 54 and 56, to show that respective inwardly directed longitudinally-extending lips 83 on the lower edges of the cover 75 fit under respective flanges 82 of the two halves 54 and 56, thus holding those halves of the head together. In a space between the cover 75 and the flanges 82 of the head, a beta light (Trademark) 84 can be fitted so that any movement of the head is readily visible at night.

Figure 8 shows how the distal end of peg 66 in horizontal position rests on the fishing line 22, with the neck portion of the peg 66 immediately adjacent to the enlarged portion 74 actually in contact with the line 22.

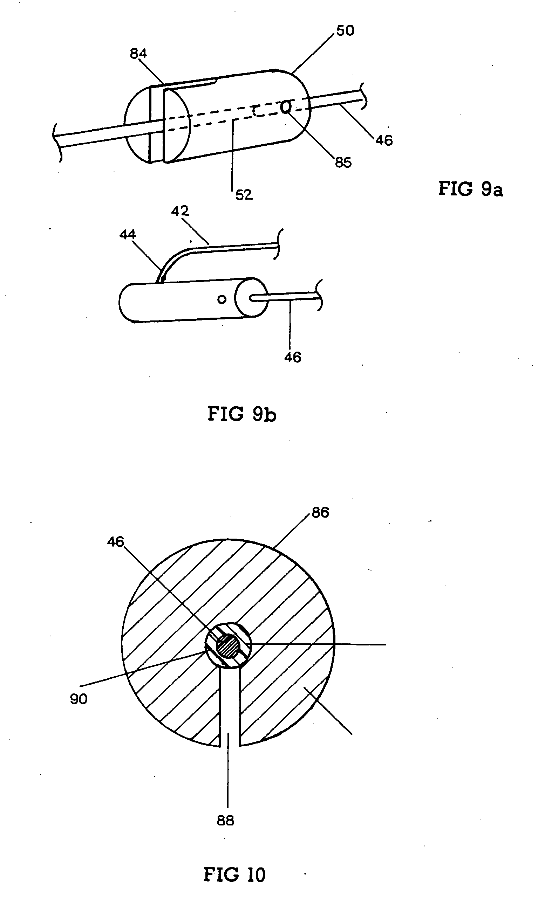

The weight 50 is shown in greater detail in Figures 9a and 9b. The weight is cylindrical and has an axial through-bore 52. The main part 46 of the arm 24 extends through the bore 52. The weight further has a slot 84 in its rear end to accommodate the U-bend 44 in the wire of the arm 24 when the weight is moved to the rearmost extremity of the arm 24, enabling part of the weight to project beyond that extremity. At the end of the weight 50 which is further from the slot 84 a drilling e.g. transverse bore 85 extends from the cylindrical outer surface of the weight to the bore 52. The drilling 85 is filled with a silicone rubber insert which extends around the wire of the arm 24 to provide frictional resistance to movement by gravitational force, whilst readily enabling the weight 50 to be slid along the arm 24 manually.

The cross-section of an additional cylindrical weight 86 which can be slipped onto the arm 24 is illustrated in Figure 10. The weight 86 has a "key" shaped slot 88 cut through it which allows it to drop onto the wire 46 of the arm 24. The weight is then pushed onto a section of the wire 46 sheathed with a silicone rubber tube 90 which thus holds the weight in place by friction.

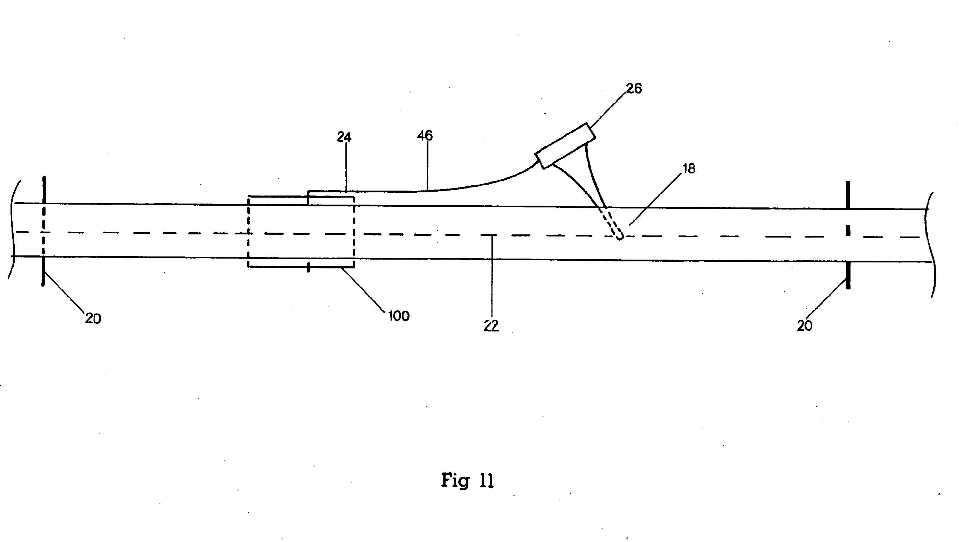

The plan view shown in Figure 11 shows how the main portion 46 of the arm 24 may be bent slightly so that the distal end 74 of the peg 66 is slightly further away from the pivot point than the proximal end 68 thereof. As a result, when the angler makes a strike and lifts the rod 18 upwardly away from the bite indicator, the arm 24 may be lifted to a position in which it extends upwardly from the pivot point at which the peg will be directed slightly upwardly from the horizontal to ease removal of the line 22 from the peg 66. This removal may be further aided by an ability of the peg 66 to swivel in relation to the rest of the head 26 and also by a certain degree of flexibility in the stainless steel wire arm 24. Figure 11 also shows a modification in which an electronic bite indicator 100 replaces the pivot member 16 in Figure 1. The electronic bite indicator 100 is of a construction described herebelow, and provides an audible and visual signal when a fish bite occurs.

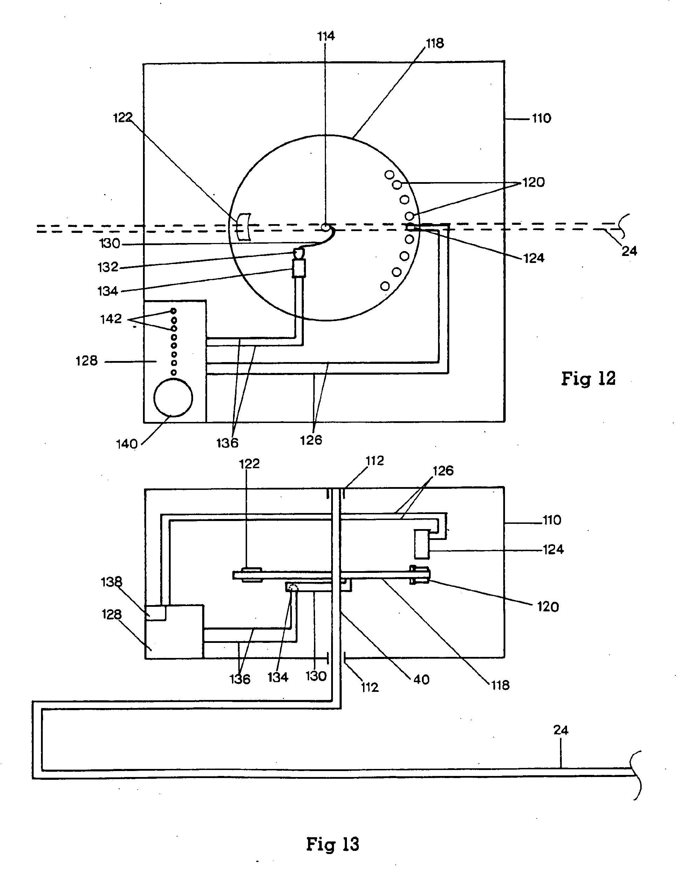

Thus the bite indicator 100 shown in the Figures 12 and 13 comprises a housing 110 provided with bearings 112 which are spaced apart and which are engaged by the transverse pivot portion 40 of the arm 24 in such a manner that the arm 24 can pivot about the bearings 112. The arm 24 is arranged to be pivoted in an upward or downward direction when a bite is made by a fish on a line of a fishing rod as illustrated in Figure 1. A rigid plastics or metal disc 118 is fixed to the transverse portion 40 of the arm 24 between the bearings 112 and within the housing 110, in such a manner that the portion 40 of the arm 24 passes through the centre of the disc 118, and the latter is perpendicular to the portion 40 of the arm 24. A plurality of permanent magnets 120 are spaced apart around the periphery of a sector of the disc 118 so as to form an arc. A counter weight 122 is fixed on the periphery of the disc 118 diametrically opposite the arc formed by the magnets 120. A reed switch 124 is mounted within the housing 110 adjacent to the arc of magnets 120, in such a position that when the arm 24 is in a generally horizontal position or normal position, the reed switch 124 is adjacent to the midpoint of the arc of magnets 120. Leads 126 connect the reed switch 124 to a signal generator 128.

A leaf spring 130 is fixed to the centre of the disc 118 on one of its ends and is provided with a stud 132 at its other end resting on a piezoelectric crystal 134 mounted on the interior of the housing in such a manner that the spring urges the stud 132 against the crystal 134 with a predetermined force when the arm 24 is in its normal position, and so that the force increases when the arm 24 is lifted and the disc 118 is rotated accordingly, and the force is decreased when the arm 116 is lowered. Leads 136 connect the piezoelectric crystal to the signal generator 128.

The signal generator 128 comprises a dry cell battery 138, a loud speaker 140, and a plurality of light emitting diodes 142 which are spaced apart and are arranged in a vertical line. Electrical circuitry is provided with the signal generator 128, which circuitry is not described here in detail as it is believed to be readily apparent to one familiar with the art of electrical and electronic circuitry how it may be constructed to provide the effect described herein.

When the arm 24 is moved, for example in an upward direction so as to rotate the disc 118 in an anti-clockwise fashion viewing it as in Figure 12, successive permanent magnets 120 are passed close to the reed switch 124. The latter is therefore closed each time a permanent magnet passes close to it, to complete an electrical loop through the leads 126. This causes an electrical signal to be generated within the signal generator 128, which in turn causes a bleep sound to be emitted from the loud speaker 140 and at the same time to cause one of the diodes 142 to be illuminated. At the same time, the angular position of the wheel will determine the force exerted by the stud 132 on the piezoelectric crystal 134 and hence a voltage generated in the loop created by the leads 136. This in turn is used by the electrical circuitry within the signal generator 128 to alter the pitch of the sound emitted by the loud speaker 140, and also the diode which is illuminated, so that the further the disc 118 is rotated in an anti-clockwise direction as viewed in Figure 12, the higher the pitch of the sound and the higher the diode is illuminated. To enable the diode which is illuminated to be readily distinguished during night fishing, each diode may be of a different colour or different shade of colour from the others.

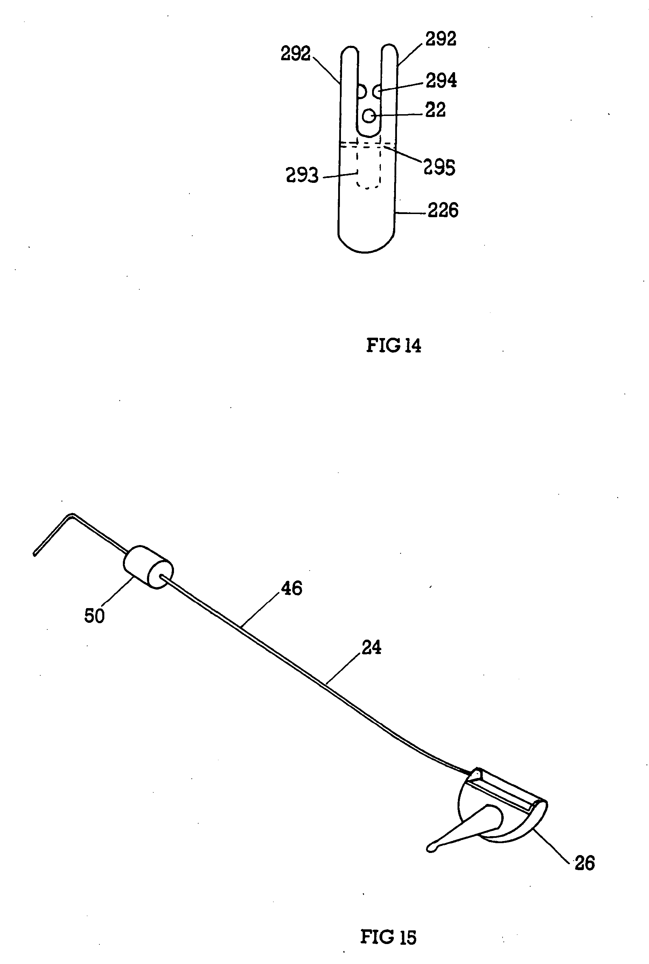

In the event that a reduced force or zero value force of the head 26 on the line 22 is not desired, the arm may have the simpler shape shown in Figure 15 in which the wire is bent to have a single bend through 90° between the transverse pivot portion 40 and the intended forwardly directed main portion 46.

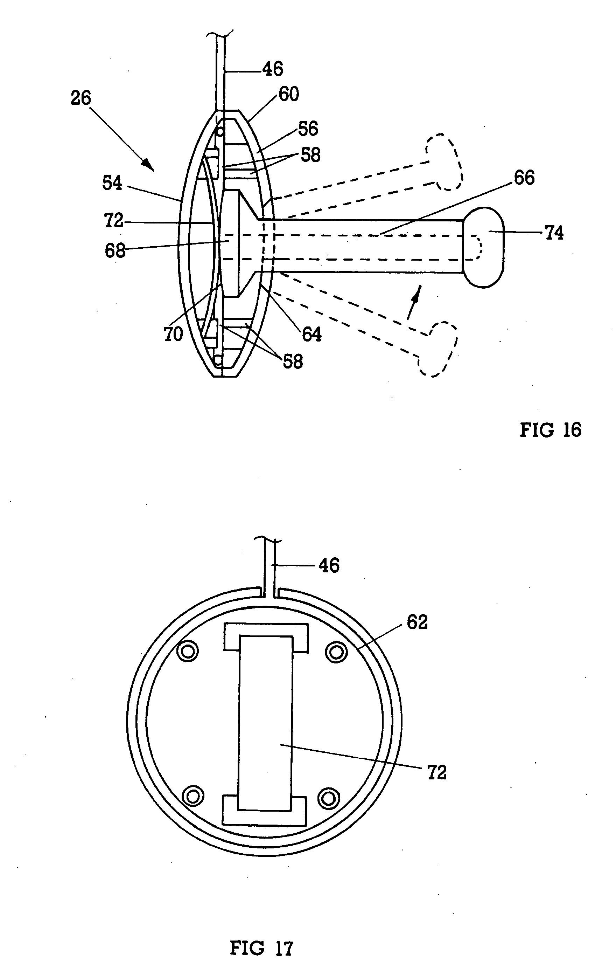

A modified head 26 for the bite indicator is shown in greater detail in Figures 14, 16 and 17. It comprises two generally circular curved halves 54 and 56, the concave faces of the two halves 54 and 56 being directed towards one another and fixed together by snap fitting portions 58 to have a hollow interior that is wider at the centre than it is at the edges of the resulting disc shape part 60. The outside of this part may be a bright colour, for example it may be coloured red or fluorescent yellow, and the disc part 60 may be about 1 inch (25.4 mm) in diameter. The intended lower end of the main portion 46 of the arm 24 may be provided with a circular loop 62 welded to that end and clamped between the two halves 54 and 56 of the disc portion 60. This fixes the head 26 to the arm 24 in such a manner that the main portion 46 of the arm 24 extends radially away from the disc portion 60.

One of the halves 56 is provided with a central hole 64 at its centre through which extends a peg 66. The latter has a widened inner end portion 68 within the hollow of the disc portion 60, the end 68 being of wider diameter than the hole 64 so that the peg 66 cannot escape from the disc portion 60. A convexly curved surface 70 of the widened portion 68, which faces away from the rest of the peg 66, abuts a convex face of a leaf spring 72 which has its ends anchored to the inside face of the half 54 of the disc portion 60. As a result, the peg 66 will tend to extend outwardly from the disc portion 60 at right angles to the main plane thereof, but can be pushed at an angle thereto against the restoring force of the leaf spring 72.

Thus it will be seen that the peg 66 is cantilevered from the disc portion 60. It may have a widening rounded free end 74. The peg 66 rests on the line 22 to create a "V" shape therein as shown in Figure 1. The widening end 74 of the peg 66 reduces the likelihood of the line 22 accidentally slipping off the peg 66, but at the same time enables the line to slip off the peg 66 when the rod 18 is lifted upwardly away from the bite indicator when an angler makes a strike.

A further modified form of head is shown in Figure 14. It comprises a generally U-sectioned main body 226 with two resiliently held ball portions 294 projecting inwardly towards one another from the two arms 292 of the U so that they normally touch one another, or so that any gap between them is less than the diameter of the fishing line 22. The resilience of the ball portions 294 may be achieved either by mounting ball bearings in a slot with springs to urge them together or by the ball portions being fixed and relying on the natural resilience of the material of the arms 292 of the head. When the bite indicator is in use, the fishing line 22 is releasably trapped in the U-shaped body 226 below two ball portions 294. However, when the line 22 is jerked by a fish bite, the head is moved correspondingly. The line may then be readily snapped out of the head thus freeing it and the rod for the subsequent action of the angler.

The head shown in Figure 14 may itself be modified by increasing the length of the arms 292 as indicated by the dotted line 293, and placing a silicon rubber ring 295 around those arms a little below the line 22. This ring 295 increases the force with which the arms are urged together without trapping the line 22 in the event of a strike.

The arm 24 may be of any length in the range from about 6 inches (152 mm) to about 15 inches (381 mm), and may be made of fiberglass, carbon fibre or injection moulded plastics instead of stainless steel.

The weight 50 may be made of lead or stainless steel, for example.

It will be appreciated that the slidable weight 50 may be adjusted to give the correct downward force of the head 26 on the line 22, to counter any drag on the line caused by moving water or wind. The resulting indication may be made sensitive to a fish bite without giving false indications owing to water current or cross winds or even head winds.

One permanent magnet may be provided on the disc 118, and a plurality of reed switches 124 may be arranged around and adjacent to the periphery of the disc 118. As a result, as the disc 118 rotates the permanent magnet will pass by successive reed switches to close successive different electrical loops. The signal generator 128 will therefore be able to recognize the angular position of the disc 118 according to which reed switch is closed, thus avoiding the need for the piezoelectric arrangement of the illustrated electronic bite indicator.

It will be appreciated that it would be desirable to have the reed switch or switches in an open condition when the arm 24 is in its normal position, so as to conserve energy in the battery.

It will also be appreciated that instead of altering the sound pitch with the angle of the disc 118, it would be possible to alter the intensity of the noise emitted by the loud speaker to enable the user to distinguish between different angular positions of the arm 24.

Although the pivot axis of the arm 24 is shown positioned below the rod 18 in Figure 1, the bank stick 10 and/or the pivot member 16 could be so constructed as to position the pivot axis above the rod 18. Furthermore, the weight 50 could be sufficient to urge the head 26 upwardly when the weight 50 is positioned at the rear end of the arm 24, to create an inverted V-shape in the line 22 (possibly with the line 22 above the rod 18 along the entire length thereof), so that slackening of the line 22 causes the head 26 to rise, and tightening causes it to drop.

The head 26 as illustrated in Figures 5 to 8 may be modified so that the direction in which the peg 66 projects may be reversed, without removing the two halves 54 and 56 from the main portion 46 of the arm, to allow for a strike in a different direction. This may be effected by having a suitable arrangement of flanges on both halves 54 and 56. For example, the cap 76 of Figures 5 and 6 may be moulded integrally with the peg 66, the latter having an end portion of uniform cross-section to allow for the thickness of the main body of the head constructed by the two halves 54 and 56, and formations being present on that end of the peg to engage corresponding formations on both halves 54 and 56. Alternatively, where it is acceptable to remove the head 26 from the portion 46 of the arm, reversal may be facilitated simply by having an aperture for the portion 46 at both ends of the cover 75.

To avoid the complexity of construction of the weights shown in Figures 9a, 9b and 10, a fixed weight may be permanently secured at the U-bend 44 as a counterbalance to the peg, and a second weight, which may be of simple construction, for example a simple cylinder with an axial through-bore, can engage the arm in a slidable fashion.

## Claims

1. A bite indicator for use in indicating a bite made by a fish on a line (22) of a fishing rod (18), comprising a pivot member (16), an arm (24) which is attached to the pivot member (16) in a pivotable manner, and a line engagement part (66) which is attached to the arm (24) at a position which is spaced from the pivot member (16) which part (66) is adapted to engage such a line (22) when the indicator is in use, whereby a slackening or a tightening of the line (22) will cause the line engagement part (66) to drop or rise as the arm (24) pivots downwardly or upwardly about its pivotal attachment to the pivot member (16), the indicator being so constructed that the pivot member (16) can be made secure with the ground independently of the rod (18) when the indicator is in use, and the line engagement part (66) being so constructed as to be readily disengageable from such a line, upon the occurrence of a bite, in which a slidable weight (50) having an axial through-bore (52) is attached to the arm (24) which is made of wire in such a manner that it can be slid therealong to adjust the downward force exerted by the line engagement part (66) on such a line (22), and friction material is inserted into the axial through-bore (52) of said weight (50), to afford a friction engagement on the wire arm which is easily overcome by the hand, but which is great enough to keep the weight (50) at a selected position on the wire arm, **characterised in that** the wire arm extends from the pivot member in a first direction (42) to a U-shaped portion (44) of the wire arm where it bends through substantially 180° to extend in the opposite direction beyond the pivot member (16) to the line engagement part (66).

2. A bite indicator according to claim 1, **characterised in that** the pivot member (16) is provided with an attachment part (15) which is adapted to be attached to means (10) which support such a rod (18).

3. A bite indicator according to claim 2, **characterised in that** the attachment part (15) and the pivot member (16) are two parts (15, 16) which can be readily joined together or separated by means of mutually conforming portions of those two parts.

4. A bite indicator according to claim 3, **characterised in that** the mutually conforming portions comprise a dovetail connection.

5. A bite indicator according to any preceding claim, **characterised in that** the wire arm (24) of the bite indicator is made of 60 thou (1.6 mm) diameter stainless steel wire.

6. A bite indicator according to claim 5, **characterised in that** the wire arm (24) has a transverse portion (40) which engages the pivot member (16) of the indicator in such a manner as to allow the arm (24) to pivot about its transverse portion (40).

7. A bite indicator according to any preceding claim,
**characterised in that** the U-shaped portion extends in an intended upright plane.

8. A bite indicator according to any preceding claim, **characterised in that** the slidable weight (50) has a slot (84) in its intended rear end to enable that end of the weight (50) to extend beyond the U-shaped portion (44) of the arm (24).

9. A bite indicator according to any preceding claim, **characterised in that** a transverse bore (85) extends from the side of the slidable weight (50) to the axial through-bore (52).

10. A bite indicator according to any preceding claim, **characterised in that** the bite indicator further comprises an additional weight (86) which has an axial through-bore (90) and an axially extending slot (88) which extends from the outside of the weight (86) to the axial through-bore (90) to allow the weight (86) to be attached to the wire arm (24).

11. A bite indicator according to claim 10,
**characterised in that** the wire arm (24) is provided with a friction grip sheath (91) onto which the said additional weight (86) can be slid, so that the sheath (91) fills the axial through-bore (90), and the additional weight (86) is retained in a selected position on the wire arm with a frictional resistance which can be readily overcome by hand to adjust that position.

12. A bite indicator according to any preceding claim,
**characterised in that** the line engagement part (66) comprises a projection (66) which extends transversely of the arm (24) so that it is cantilevered therefrom.

13. A bite indicator according to claim 12,
**characterised in that** the distal end of the projection (66) has an enlarged cross-section (74) relative to a portion of the projection (66) immediately adjacent to that end, to reduce the likelihood of such a line (22) slipping off the projection (66) accidentally, but at the same time readily allowing the line to slip off the end of the projection (66) upon the occurrence of a bite.

14. A bite indicator according to claim 13,
**characterised in that** the enlarged distal end projects in an intended forward and downward direction, so that it engages such a line (22) when the wire arm (24) is horizontal or sloping downwardly, from its pivotal attachment, and releases the line (22) when the wire arm (24) is lifted.

15. A bite indicator according to any preceding claim, **characterised in that** means (100) are fixed relative to the wire arm (24) to cause an electrical signal to be generated upon movement of the wire arm (24), there being audible or visual signal generating means connected to receive such an electrical signal and to generate an audible or visual signal upon receipt of such a signal.

16. An assembly comprising a bank stick supporting a fishing rod and a bite indicator as claimed in any preceding claim, the bite indicator engaging a line of the fishing rod.

## Patentansprüche

1. Biss-Anzeiger zur Verwendung beim Anzeigen eines Bisses, der von einem Fisch an einer Schnur (22) einer Angelrute (18) gemacht wird, der einen Drehteil (16), einen Arm (24), der am Drehteil (16) auf drehbare Art und Weise angebracht ist, und ein Schnur-Eingriffteil (66) aufweist, das am Arm (24) an einer Position angebracht ist, die vom Drehteil (16) beabstandet ist, wobei das Teil (66) dafür ausgelegt ist, in diese Schnur (22) einzugreifen, wenn der Anzeiger in Verwendung ist, wodurch ein Lockern oder ein Anziehen der Schnur (22) das Schnur-Eingriffteil (66) dazu veranlasst, abzufallen oder anzusteigen, wenn sich der Arm (24) abwärts oder aufwärts um seine Dreh-Anbringung am Drehteil (16) dreht, wobei der Anzeiger derart aufgebaut ist, dass das Drehteil (16) an dem Boden unabhängig von der Rute (18) gesichert werden kann, wenn der Anzeiger in Verwendung ist, und wobei das Schnur-Eingriffteil (66) derart aufgebaut ist, dass es von dieser Schnur auf das Auftreten eines Bisses hin leicht lösbar ist, wobei ein gleitbares Gewicht (50), das eine axiale Durchbohrung (52) hat, am Arm (24), der aus Draht besteht, auf solche Art und Weise angebracht ist, dass es an ihm entlang gleiten kann, um die Abwärtskraft einzustellen, die durch das Schnur-Eingriffteil (66) auf diese Schnur (22) ausgeübt wird, und wobei Reibungsmaterial in die axiale Durchbohrung (52) des Gewichts (50) eingesetzt ist, um einen Reibungseingriff auf dem Drahtarm zu erwirken, der leicht per Hand überwunden werden kann, aber groß genug ist, um das Gewicht (50) an einer ausgewählten Position am Drahtarm zu halten, **dadurch gekennzeichnet, dass** sich der Drahtarm vom Drehteil aus in eine erste Richtung (42) zu einem U-förmigen Abschnitt (44) des Drahtarms erstreckt, wo er sich um im Wesentlichen 180° biegt, um sich in die entgegengesetzte Richtung über das Drehteil (16) hinaus zu dem Schnur-Eingriffteil (66) hin zu erstrecken.

2. Biss-Anzeiger gemäß Anspruch 1, **dadurch gekennzeichnet, dass** das Drehteil (16) mit einem Anbringungsteil (15) versehen ist, das dafür ausgelegt ist, an einer Einrichtung (10) angebracht zu sein, die diese Rute (18) trägt.

3. Biss-Anzeiger gemäß Anspruch 2, **dadurch gekennzeichnet, dass** das Anbringungsteil (15) und das Drehteil (16) zwei Teile (15, 16) sind, die mittels gegenseitig zusammenpassenden Abschnitten dieser zwei Teile vollständig miteinander verbunden werden können oder voneinander getrennt werden können.

4. Biss-Anzeiger gemäß Anspruch 3, **dadurch gekennzeichnet, dass** die gegenseitig zusammenpassenden Abschnitte eine Keil-Zinken-Verbindung aufweisen.

5. Biss-Anzeiger gemäß einem der vorhergehenden Ansprüche, **dadurch gekennzeichnet, dass** der Drahtarm (24) des Biss-Anzeigers aus einem rostfreien Stahldraht mit 60 thou (1,6 mm) Durchmesser besteht.

6. Biss-Anzeiger gemäß Anspruch 5, **dadurch gekennzeichnet, dass** der Drahtarm (24) einen Querabschnitt (40) hat, der in das Drehteil (16) des Anzeigers auf solche Art und Weise eingreift, dass es dem Arm (24) erlaubt ist, sich um seinen Querabschnitt (40) zu drehen.

7. Biss-Anzeiger gemäß einem vorhergehenden Anspruch, **dadurch gekennzeichnet, dass** sich der U-förmige Abschnitt in einer beabsichtigten senkrechten Ebene erstreckt.

8. Biss-Anzeiger gemäß einem vorhergehenden Anspruch, **dadurch gekennzeichnet, dass** das gleitbare Gewicht (50) einen Schlitz (84) an seinem beabsichtigten Rückende hat, damit sich dieses Ende des Gewichts (50) über dem U-förmigen Abschnitt (44) des Arms (24) hinaus erstrecken kann.

9. Biss-Anzeiger gemäß einem vorhergehenden Anspruch, **dadurch gekennzeichnet, dass** sich eine Querbohrung (85) von der Seite des gleitbaren Gewichts (50) zu der axialen Durchbohrung (52) erstreckt.

10. Biss-Anzeiger gemäß einem vorhergehenden Anspruch, **dadurch gekennzeichnet, dass** der Biss-Anzeiger weiterhin ein zusätzliches Gewicht (86) aufweist, das eine axiale Durchbohrung (90) und einen sich axial erstreckenden Schlitz (88) hat, welcher sich von der Außenseite des Gewichts (86) zu der axialen Durchbohrung (90) hin erstreckt, um dem Gewicht (86) zu erlauben, an dem Drahtarm (24) angebracht zu werden.

11. Biss-Anzeiger gemäß Anspruch 10, **dadurch gekennzeichnet, dass** der Drahtarm (24) mit einer Reibungs-Griffhülse (91) versehen ist, auf die das zusätzliche Gewicht (86) aufgleiten kann, so dass die Hülse (91) die axiale Durchbohrung (90) ausfüllt und das zusätzliche Gewicht (86) in einer ausgewählten Position am Drahtarm mit einem Reibungswiderstand festgehalten ist, der leicht per Hand überwunden werden kann, um diese Position einzustellen.

12. Biss-Anzeiger gemäß einem vorhergehenden Anspruch, **dadurch gekennzeichnet, dass** das Schnur-Eingriffteil (66) einen Vorsprung (66) aufweist, der sich quer zum Arm (24) derart erstreckt, dass er auslegerartig an ihm angeordnet ist.

13. Biss-Anzeiger gemäß Anspruch 12, **dadurch gekennzeichnet, dass** das distale Ende des Vorsprungs (66) einen vergrößerten Querschnitt (74) relativ zum Abschnitt des Vorsprungs (66) hat, der unmittelbar benachbart zu diesem Ende ist, um die Wahrscheinlichkeit zu reduzieren, dass diese Schnur (22) von dem Vorsprung (66) zufälligerweise abrutscht, aber gleichzeitig leicht der Schnur erlaubt, vom Ende des Vorsprungs (66) auf das Auftreten eines Bisses hin abzurutschen.

14. Biss-Anzeiger gemäß Anspruch 13, **dadurch gekennzeichnet, dass** das vergrößerte distale Ende in einer beabsichtigten Vorwärts- und Abwärtsrichtung hervorsteht, so dass es in diese Schnur (22) eingreift, wenn der Drahtarm (24) horizontal ist oder nach unten von seiner Dreh-Anbringung aus gebogen ist, und die Schnur (22) freigibt, wenn der Drahtarm (24) angehoben wird.

15. Biss-Anzeiger gemäß einem vorhergehenden Anspruch, **dadurch gekennzeichnet, dass** die Einrichtung (100) relativ zum Drahtarm (24) befestigt ist, um zu verursachen, dass ein elektrisches Signal auf die Bewegung des Drahtarms (24) hin erzeugt wird, wobei es eine Erzeugungseinrichtung für ein hörbares oder visuelles Signal gibt, die verbunden ist, um ein solches elektrisches Signal zu empfangen und um ein hörbares oder visuelles Signal auf den Empfang eines solchen Signals hin zu erzeugen.

16. Vorrichtung, die einen Uferstab hat, der eine Angelrute und einen Biss-Anzeiger, wie er in irgendeinem vorhergehenden Anspruch beansprucht wird, trägt, wobei der Biss-Anzeiger in eine Schnur der Angelrute eingreift.

## Revendications

1. Indicateur de touche, destiné à être utilisé pour indiquer qu'un poisson mord à une ligne (22) d'une canne à pêche (18), comprenant un organe de pivotement (16), un bras (24) qui est fixé d'une manière pivotante à l'organe de pivotement (16), et une pièce (66) qui peut venir en prise avec la ligne et qui est fixée au bras (24) en un endroit espacé de l'organe de pivotement (16), cette pièce (66) étant susceptible de venir en prise avec une telle ligne (22) lorsque l'indicateur est utilisé, dans lequel le relâchement ou la tension de la ligne (22) amène la pièce (66) qui est en prise avec la ligne à descendre ou à monter lorsque le bras (24) pivote vers le bas ou vers le haut autour de sa fixation pivotante à l'organe de pivotement (16), l'indicateur étant construit d'une manière telle que l'organe de pivotement (16) puisse être rendu solidaire du sol indépendamment de la canne à pêche (18) lorsque l'indicateur est utilisé, et la pièce (66) qui peut venir en prise avec la ligne étant construite de manière à pouvoir être facilement dégagée d'une telle ligne lorsqu'une touche se produit, dans lequel un poids glissant (50) présentant un perçage traversant axial (52) est fixé au bras (24) qui est constitué par du fil, et ce, de manière à pouvoir le faire glisser le long de celui-ci afin de régler la force dirigée vers le bas qui est exercée sur une telle ligne (22) par la pièce (66) en prise avec la ligne, et qu'un matériau de friction est inséré dans le perçage traversant axial (52) dudit poids (50) pour fournir sur le bras en fil un contact à frottement qui cède facilement à la main, mais qui est suffisamment fort pour maintenir le poids (50) dans une position choisie sur le bras en fil,
**caractérisé par le fait que** le bras en fil s'étend depuis l'organe de pivotement dans une première direction (42) vers une partie en forme de U (44) du bras en fil où il est courbé sensiblement de 180° de façon à s'étendre dans la direction opposée au-delà de l'organe de pivotement (16) et vers la pièce (6) qui vient en prise avec la ligne.

2. Indicateur de touche selon la revendication 1,
**caractérisé par le fait que** l'organe de pivotement (16) est muni d'une pièce de fixation (15), celle-ci étant susceptible d'être fixée à des moyens (10) qui supportent une telle canne à pêche (18).

3. Indicateur de touche selon la revendication 2,
**caractérisé par le fait que** la pièce de fixation (15) et l'organe de pivotement (16) sont deux pièces (15, 16) qui peuvent être facilement réunies ou séparées au moyen de parties de ces deux pièces dont la conformation est mutuellement complémentaire.

4. Indicateur de touche selon la revendication 3,
**caractérisé par le fait que** les pièces dont la conformation est mutuellement complémentaire comprennent un assemblage à queue d'aronde.

5. Indicateur de touche selon l'une quelconque des revendications précédentes, **caractérisé par le fait que** le bras en fil (24) de l'indicateur de touche est constitué par un fil en acier inoxydable dont le diamètre est de 60 thou (1,6 mm) .

6. Indicateur de touche selon la revendication 5,
**caractérisé par le fait que** le bras en fil (24) comporte une partie transversale (40) qui vient en prise avec l'organe de pivotement (16) de l'indicateur, de manière à permettre au bras (24) de pivoter autour de sa partie transversale (40).

7. Indicateur de touche selon l'une quelconque des revendications précédentes, **caractérisé par le fait que** la partie en forme de U s'étend dans un plan qui est destiné à être vertical.

8. Indicateur de touche selon l'une quelconque des revendications précédentes, **caractérisé par le fait que** le poids glissant (50) présente une fente (84) dans son extrémité qui est destinée à être à l'arrière, de façon à permettre à cette extrémité du poids (50) de s'étendre au delà de la partie en forme de U (44) du bras (24).

9. Indicateur de touche selon l'une quelconque des revendications précédentes, **caractérisé par le fait qu'**un perçage transversal (85) s'étend depuis le côté du poids glissant (30) jusqu'au perçage traversant axial (52).

10. Indicateur de touche selon l'une quelconque des revendications précédentes, **caractérisé par le fait que** l'indicateur de touche comprend en outre un poids supplémentaire (86) qui présente un perçage traversant axial (90) et une fente s'étendant axialement (88) qui s'étend depuis l'extérieur du poids (86) jusqu'au perçage traversant axial (90) afin de permettre de fixer le poids (86) au bras en fil (24).

11. Indicateur de touche selon la revendication 10,
**caractérisé par le fait que** le bras en fil (24) est pourvu d'une gaine d'ancrage par friction (91) sur laquelle ledit poids supplémentaire (86) peut être glissé, de sorte que la gaine (91) remplit son perçage traversant axial (90), et que le poids supplémentaire (86) est retenu dans une position choisie sur le bras en fil avec une résistance par frottement qui peut être facilement vaincue à la main pour régler cette position.

12. Indicateur de touche selon l'une quelconque des revendications précédentes, **caractérisé par le fait que** la pièce (66) qui vient en prise avec la ligne comprend une partie en saillie (66) qui s'étend transversalement par rapport au bras (24), de sorte qu'elle est en porte-à-faux sur celui-ci.

13. Indicateur de touche selon la revendication 12,
**caractérisé par le fait que** l'extrémité extérieure de la partie en saillie (66) présente une section transversale agrandie (74) par rapport à une portion de la partie en saillie (66) qui est immédiatement adjacente à cette extrémité, afin de réduire le risque qu'une telle ligne (22) ne glisse accidentellement hors de la partie en saillie (66), mais en permettant en même temps que la ligne glisse facilement hors de l'extrémité de la partie en saillie (66) lorsqu'une touche se produit.

14. Indicateur de touche selon la revendication 13,
**caractérisé par le fait que** l'extrémité extérieure agrandie fait saillie dans une direction qui est destinée à être orientée vers l'avant et vers le bas, de sorte qu'elle vient en prise avec une telle ligne (22) lorsque le bras en fil (24) est horizontal ou incliné vers le bas depuis sa fixation en pivotement et qu'elle libère la ligne (22) lorsque le bras en fil (24) est soulevé.

15. Indicateur de touche selon l'une quelconque des revendications précédentes, **caractérisé par le fait que** des moyens (100) sont fixés par rapport au bras en fil (24) pour amener un signal électrique à être engendré lorsque le bras en fil (24) se déplace, des moyens générateurs de signaux acoustiques ou optiques étant connectés de façon à recevoir un tel signal électrique et à engendrer un signal acoustique ou optique lorsqu'ils reçoivent un tel signal.

16. Ensemble comprenant un piquet de fixation sur la berge supportant une canne à pêche et un indicateur de touche selon l'une quelconque des revendications précédentes, l'indicateur de touche étant en prise avec une ligne de la canne à pêche.
